Europäisches Patentamt

(19) European Patent Office

Office européen des brevets

(11) Numéro de publication: **0 018 866**

**B2**

(12) **NOUVEAU FASCICULE DE BREVET EUROPEEN**

(45) Date de publication du nouveau fascicule du brevet: **08.08.90**

(21) Numéro de dépôt: **80400453.9**

(22) Date de dépôt: **04.04.80**

(51) Int. Cl.⁵: **C 09 C 1/30, C 08 K 3/34**

(54) **Nouveau pigment à base de silice sous forme de bille, ou perle, procédé pour l'obtenir et application, notamment comme charge renforçante dans les élastomères.**

(30) Priorité: **13.04.79 FR 7909403**

(43) Date de publication de la demande:
**12.11.80 Bulletin 80/23**

(45) Mention de la délivrance du brevet:
**22.09.82 Bulletin 82/26**

(45) Mention de la decision concernant l'opposition:
**08.08.90 Bulletin 90/32**

(84) Etats contractants désignés:
**BE DE FR GB IT LU SE**

(56) Documents cités:
**DE-A-2 434 908**
**DE-A-2 447 613**
**FR-A-1 471 568**
**FR-A-2 012 184**
**FR-A-2 286 793**
**GB-A-1 121 932**
**GB-A-1 289 135**
**NL-A-6 502 791**
**US-A-2 863 727**
**US-A-4 094 771**
**US-A-4 173 491**
**Die Mühle und Mischfuttertechnik (1977) Nr. 114 (3)**

(73) Titulaire: **RHONE-POULENC CHIMIE**
**25, quai Paul Doumer**
**F-92408 Courbevoie Cédex (FR)**

(72) Inventeur: **Ray, Jean-Louis**
**14, rue Galliéni**
**F-69660 Collonges (FR)**
Inventeur: **Coudurier, Maurice**
**11, rue Bailli de Suffren**
**F-69330 Meyzieu (FR)**

(74) Mandataire: **Dubruc, Philippe et al**
**RHONE-POULENC INTERSERVICES Service**
**Brevets Chimie 25, quai Paul-Doumer**
**F-92408 Courbevoie Cédex (FR)**

EP 0018866 B2

Courier Press, Leamington Spa, England.

# EP 0 018 866 B2

**Description**

La présente invention a pour objet un nouveau pigment à base de silice sous forme de bille, ou perle.

Elle a trait également au procédé pour l'obtenir et à son application notamment comme charge renforçante dans les élastomères.

On sait que l'on a proposé depuis longtemps d'incorporer des charges blanches comme la silice en lieu et place des charges noires comme le noir de carbone.

Mais de telles charges doivent tout d'abord bien pouvoir se disperser dans l'élastomère. De plus, il convient de conférer à l'élastomère non seulement les propriétés mécaniques statiques élevées, mais aussi des propriétés dynamiques nécessaires, selon l'application envisagée.

Dans le cas particulier des applications pour pneumatiques, ces charges ne doivent pas entraîner un échauffement interne en service dynamique.

On a tout d'abord voulu établir des corrélations entre la silie et son comportement dans les élastomères par analogie avec le noir de carbone. C'est ainsi que l'on a voulu faire une relation entre la surface BET et ledit comportement. Mais cette approche a conduit à des résultats non seulement peu satisfaisants mais contradictoires. En fait, ces corrélations apparemment parfois aberrantes semblent dues au moins en partie aux différences de morphologie existant entre les noirs de carbone et les silices.

En particulier, les noirs de carbone utilisés comme charges renforçantes présentent en général une structure primaire élevée et une structure secondaire faible, alors que la structure secondaire des silices précipitées par rapport à leur structure primaire est loin d'être négligeable. Par structure primaire on entend le résultat de la coalescence des particules ultimes qui forment les agrégats. Il convient de remarquer que les liaisons entre les particules ultimes, dans un agrégat, sont les liaisons fortes de type chimique.

Par structure secondaire, on entend le résultat des interactions physiques entre les agrégats pour former les agglomérats. A la différence de ce qui se passe dans la structure primaire, ces liaisons sont faibles et de type physique. De plus l'on a tout lieu de penser que la structure primaire de la silice est différente de celle des noirs de carbone.

Aussi, selon une première voie, l'on a cherché depuis longtemps, à modifier la morphologie des silices précipités afin d'améliorer son comportement. C'est ainsi que dans le FR—A 2 353 486, au nom de la demanderesse, l'on a revendiqué une silice présentant une surface CTAB comprise entre 80 et 125 m²/g et un indice de structure au moins égal à 0,80.

Mais une silice sous forme pulvérulente présente l'inconvénient de produire de la poussière lors de sa manipulation. C'est pourquoi il s'est avéré préférable de granuler la silice.

Toutefois, on observe que dans le cas d'une silice granulée, d'une part le degré de dispersion de la silice granulée est moindre que celui de la silice non granulée, et que d'autre part, le degré de renforcement est également moindre, ce que se manifeste sur les propriétés mécaniques du mélange vulcanisé.

Pour obvier à cet inconvénient, diverses solutions ont déjà été proposées.

Ainsi dans le brevet français 2 111 148 on a proposé de granuler de la silice dans un granulateur à cuvette ou à tambour en présence d'eau comme liant, en effectuant la granulation sous agitation à un pH inférieur à 6,3.

L'inconvénient d'une telle présentation est la forme très hétérogène des granulés (spectre granulométrique très étalé, attrition élevée) la difficulté d'extrapoler avec des temps de séchage aussi longs (8 à 24 heures) et la nécessité de mélanger préalablement des liquides très visqueux (gâteau de silice appelé suspension dans ledit brevet) avec des poudres de façon homogène (nécessité soit d'emploi de mélangeurs très sophistiqués en continu, soit d'emploi de mélangeurs très simples (type pétrins) mais discontinus).

Dans les brevets US 3 646 183 et 3 787 221, on a proposé de granuler de la silice précipitée en faisant appel à un agent tensio-actif comme agent liant.

Malheuresement, la présence de cet agent complique le problème du séchage : décomposition possible du liant, nécessité de séchages à basse température donc avec des rendements thermiques faibles.

Selon le brevet US 3 902 915, le problème de la granulation est particulièrement critique dans le cas d'un sécheur par tambour rotatif qui conduit à une granulé trop compact qui se disperse mal dans une composition pour caoutchouc.

C'est pourquoi dans ce brevet, on fait appel à un lit fluidisé mais alors la teneur en matière sèche est faible dans la bouillie issue du gâteau de filtration.

Une autre technique envisageable pour le séchage consiste à faire appel à une atomisation, mais d'une part cette technique conduit à une silice finement divisée, d'autre part, selon l'enseignement admis dans l'art antérieur, on ne peut pas atomiser une silice précipitée relativement riche en matière sèche sauf à travailler à un pH acide, au maximum égal à 4.

Dans ce cas, il y a nécessité de neutraliser ensuite comme il est écrit dans le FR—A 2 230 645, mais ceci introduit une complexité et donc un prix de revient plus élevé.

On sait aussi que l'on peut presser ou compacter des poudres mais dans ces cas les produits obtenus coulent difficilement, ont une faible résistance à l'atrition en raison de la présence d'arêtes vives, et se dispersent mal, à cause de leur compacité élevée.

2

De plus, en ce qui concerne les procédés mis en œuvre il est nécessaire d'effectuer des recyclages importants, ce qui bien entendu alourdit considérablement ledit procédé.

Enfin dans le brevet français 2 249 834 on a décrit un procédé qui consiste, lors du perlage, à ajouter à la silice ou au silicate de 5 à 60% en poids d'huile de dilution émulsionnée dans l'eau de perlage.

Mais ce procédé est onéreux, peu souple (puisque lié à des formules caoutchouc) et conduit à faire appel en fait à deux séchages l'un sur la silice elle-même, l'autre sur la silice plus l'émulsion huile-eau.

Quant au procédé qui consiste à chauffer une composition à base de grains d'hydrogel de silice pendant une durée inférieure à 5 secondes à une température comprise entre 300 et 1 000°, tel que décrit dans le FR—A 2 332 234 il ne conduit malheureusement pas à un produit qui puisse répondre aux exigences d'une charge renforçante en élstomères (trop compact 40 à 70 bars de pression et prix élevé).

Le DE—A—2 434 908 décrit des perles de silice ayant un diamètre inférieur à 100 μ et une densité apparente de 0,7—1,5 (pages 5/6). Ces perles sont poreuses et ont une surface interne de 1—400 m²/g. Elles sont préparées à partir d'une émulsion eau/huile.

Le GB—A—1 121 932 décrit des granules sphériques composites de silice d'un diamètre de 0,5—8 mm. Ces granulés sont préparés au moyen d'un drageoir.

Le FR—A—1 471 568 décrit la préparation de granulés composites dont les particules secondaires sont d'une taille de 1—70 μ par cuisson après avoir fait passer la poudre sèche dans un mélangeur incliné.

Ces procédés ne conduisent pas à des billes sphériques pleines et homogènes.

Le FR—A—2 286 793 (US—A—4 094 771) décrit la fabrication de silice précipitée par reprise d'un gâteau de filtration, ajustage du pH au-dessous de 4 et de la teneur en matière sèche à plus de 18% avant l'atomisage, mais ce procédé conduit à de la silice précipitée différente de celle obtenue selon l'invention.

Le document GB—A—1 289 135 décrit une silice précipitée dont la taille moyenne des particules peut être de 10 à 150 μm et la surface BET de 50 à 300 m²/g.

"Die Mühle und Mischfuttertechnik 114 3 (1977)" décrit des microbilles de silice d'une taille pouvant atteindre 80 μm.

Le demande de brevet néerlandais NL—A—6502791 se rapporte à la préparation d'une silice par précipitation en milieu relativement peu acide. La teneur en matière sèche de la dispersion est cependant très faible.

Mais maintenant, on a trouvé et c'est ce qui fait l'objet de la présente invention, un nouveau produit constitué par un pigment à base de silice, précipitée caractérisé par le fait qu'il se présente sous la forme de bille sensiblement sphérique pleine et homogène.

De tels pigments se présentent sous forme de bille (ou perle) pleine,

de taille de particules moyenne supérieure à 150 μm et de préférence comprise entre 200 et 300 μm,

de densité de remplissage à l'état tassé selon norme AFNOR n° T30042 supérieure à 0,200 de préférence comprise entre 0,28 et 0,32

de surface BET comprise entre 100 et 350 m²/g

de surface CTAB comprise entre 100 et 350 m²/g

de volume spécifique $V_{600}$ compris entre 0,7 et 1,1.

La surface spécifique BET est déterminée selon la méthode de BRUNAUER — EMMETT — TELLER décrite dans The Journal of The American Chemical Society, vol. 60 p. 309 février 1938.

La surface CTAB: surface externe par adsorption de bromure de céthyl triméthyl ammonium à pH 9 selon la méthode exposée par JAY, JANZEN et G. KRAUS dans Rubber Chemistry and Technology *44* (1971) p. 1297—1296.

Le volume spécifique de la silice $V_{600}$ est déterminé à partir d'une quantité établie d'une silice pressée dans une matrice d'acier de diamètre intérieur égal à 25 mm et de hauteur égale à 80 mm dans laquelle on ajoute 3 g de silice puis dispose au-dessus un piston sur lequel on ajoute un poids déterminé de manière à axercer sur la silice une pression de 600 kg/cm². Il reflète le volume de vide inter-agrégat et est caractéristique de la structure primaire de la silice.

De plus, les produits, selon l'invention présentent une fluidité remarquable de l'ordre de quelques secondes, améliorée, par rapport aux produits en poudre correspondant, d'un facteur multiplicatif sensiblement compris entre 15 et 50. Il s'en suit que le produit ne poussière pas lors de la manipulation des vulcanists dans un mélangeur.

La coulabilité est appréciée par le temps de passage dans un silo d'orifice calibré soumis à une légère vibration. Il s'agit d'une mesure relative qui dépend des conditions opératoires mais qui est significative de la comparaison avec un produit non perlé.

Le présente invention a également trait à un procédé d'obtention du produit.

Selon ce proédé, on traite par un atomiseur une suspension issue d'une réaction de précipitation.

Selon l'invention, contrairement à la pratique de l'art antérieur on sèche à l'atomiseur une suspension de silice obtenue par précipitation présentant un pH supérieur à 4, dont la teneur en matière sèche est supérieure à 18% en poids, de préférence comprise entre 20 et 25%.

On sait que généralement la suspension de précipitation est pauvre en matière sèche et qu'il est nécessaire d'effectuer un lavage.

Aussi selon la présente invention, soit on soumet la suspension de précipitation à une filtration de type classique et on réintroduit de la matière sèche de sorte à obtenir un gâteau de filtration riche en matière sèche, soit on fait appel à une technique en soi connue, telle que filtre horizontal ou vertical pour obtenir directement la bouillie désirée.

Mais celle-ci n'est pas alors encore dans des conditions permettant son atomisation, notamment elle présente une viscosité trop élevée de l'ordre de 400 N s/m$^2$, mesurée à un gradient de vitesse de 10$^3$ seconde$^{-1}$.

De matière pratique, on soumet alors cette bouille à au moins une opération de délitage de sorte à rendre la bouillie pompable et à éliminer les plus grosses particules étant donné que la régularité de l'opération d'atomisation est conditionnée par une bonne homogénéité et l'absence de grosses particules supérieures à 150 μ, qui présente un taux de matière sèche supérieur à 18%, avantageusement compris entre 20 et 25%, et une viscosité toujours mesurée à un gradient de vitesse de 10$^3$ seconde$^{-1}$ de préférence comprise entre 10 et 100 N s/m$^2$.

Comme dit précédemment le pH du produit est de l'ordre de celui de fin de précipitation c'est-à-dire supérieure ou égal à 4, de préférence compris entre 4,5 et 6.

La suspension ainsi obtenue est alors soumise à une opération d'atomisation de tout type connu.

On peut ainsi faire appel à une technique d'atomisation à l'aide de buses à pression liquide, telles que décrites dans l'ouvrage de Masters, p. 169 et suivantes — Spray Drying Second Edition — George Godwin Ltd — London — John Wiley and Son New York.

Dans ce cas, on peut selon la présente intention travailler à des pressions relativement basses de l'ordre de 20 à 40 bars sur le fluide de pulvérisation.

Mais il est bien évident que cette fourchette n'est donnée qu'à titre indicatif dans la mesure où il y a lieu de tenir compte de la viscosité de la suspension, laquelle peut être modifiée, le cas échéant, en faisant appel à des composés tels que carboxy-méthyl cellulose, alginates, etc. . . . quand il s'agit de l'augmenter, ou d'acides lorsqu'il s'agit de la diminuer.

On peut aussi faire appel à un type d'atomisation à deux fluides, le fluide de pulvérisation étant constitué par un gaz à haute vitesse comme décrit dans l'ouvrage de Perry and Chilton — Chemical Engineers Handbook — 5th Edition 18—61, ou dans l'ouvrage Masters cité précédemment p. 206 et suivantes.

L'opération d'abaissement de la viscosité par délitage est réalisée par un moyen ou une suite de moyens connus.

On peut en particulier faire appel à un broyeur type colloïdal ou à un broyeur à billes.

Bien que dans l'état actuel des choses, on en soit réduit aux hypothèses en ce qui concerne l'explication du procédé selon l'invention, il apparait que l'évolution de la suspension de pigment depuis son obtention sous forme de suspension de précipitation jusqu'à la suspension d'atomisation soit importante.

Mais la présente invention sera plus aisément comprise à l'aide des exemples suivants donnés à titre indicatif mais nullement limitatif.

## Exemple 1

Dans un réacteur de 200 litres, on verse tout d'abord 88,6 litres d'une solution de silicate à 136,2 g/l de SiO$_2$ et à 38,9 g/l de Na$_2$O. On ajoute alors en 21 minutes 25,6 l d'acide sulfurique à une densité de 1,050 puis on arrête l'addition d'acide pendant 10 minutes. La température de réaction est de 73°C.

On ajoute ensuite 37,5 litres d'acide sulfurique jusqu'à amener le milieu à un pH de 7,5 puis on ajoute simultanément 9 litres de silicate à 234 g/l de SiO$_2$ et 69,4 g/l de Na$_2$O et 13,5 litres d'acide respectivement à des débits de 0,3 l/mn et 0,45 l/mn pendant 30 mn, de manière à maintenir le pH à 7,5 et à abaisser ensuite le pH à 4. Le taux de matière sèche est de 78,8 g/l.

On passe ensuite la suspension sur un filtre presse horizontal de manière à amener son taux de matière sèche à 23%. La viscosité est de 400 N s/m$^2$ sous un gradient de 10$^3$ seconde$^{-1}$. On soumet ensuite le gâteau de filtration à l'action d'un délitage au moyen d'une double vis, puis d'un déliteur colloïdal.

On obtient une suspension de viscosité sensiblement égale à 20 N s/m$^2$ toujours sous un gradient de 10$^2$ secondes$^{-1}$, les particules étant de taille substantiellement inférieure à 150 μm.

La suspension est ensuite atomisée dans un atomiseur à deux fluides alimenté avec la liqueur à atomiser et de l'air amené coaxialement dans les conditions suivantes: température d'entrée de l'air 480°C, température de sortie 135°C, l'air étant sous une pression absolue de 4 bars et de liquide sous une pression absolue de 1,5 bar.

## Exemple 2

Cet exemple est identique au précédent quant au mode de préparation de la suspension de précipitation, mais au lieu de lui faire subir une mise en forme selon l'invention, on filtre la suspension de précipitation sur un filtre rotatif de manière à obtenir un taux de matière sèche égal à 18% et on sèche de manière à obtenir une poudre pulvérulente.

## Exemple 3

A titre comparatif on met en œuvre le même mode opératoire qu'au deux exemples précédentes, mais on réalise une extrusion à partir d'un gâteau de filtration selon l'exemple 1, mais obtenu sur un filtre classique rotatif qui conduit à un gâteau à 18% de matière sèche comme à l'exemple 2.

On prend 2,5 kg de gâteau auquel on additionne 665 g de poudre constituée par de la silice de l'exemple 2. On mélange dans un mélangeur Lödige et on obtient un mélange renfermant 67% de matière sèche. On passe ce mélange dans une extrudeuse constitué par deux cylindres tournant en sens inverse, et pressés l'un contre l'autre, l'un étant perforé et le mélange étant introduit par une trémie disposée au-dessus des deux cylindres. On obtient des granulés sous forme d'extrudés obtenus avec des filières de 5 mm, que l'on sèche ensuite à l'étuve à 140°C.

### Exemple 4

Toujours à titre comparatif on met en œuvre la poudre de silice selon l'exemple 2 en la désaérant préalablement sous vide. On l'alimente ensuite dans une presse à rouleux sous des pressions de 5 et 20 bars.

On exprime la qualité du produit par son poussiérage et par sa résistance à l'attrition. Celle-ci est appréciée en formant un lit fluidisé stable à partir du produit et d'un gaz vecteur (air comprimé). Sous la pression exercée par ce gaz, le lit est mis en suspension et est dépoussiéré constamment. Les fines entraînées par le courant gazeux sont recueillies et pesées dans une cartouche en cullulose prétarée, afin de connaître l'évolution du poids en fonction du temps. Pratiquement on fluidise 20 g de produit dans un tube alimenté en air comprimé sec par l'intermédiaire d'un orifice de 0,4 mm de diamètre, la vitesse dans le tube est de 0,40 m/s et la pression en amont de l'orifice est de 0,25 bar. On mesure la perte de poids en fonction du temps. A titre comparatif on a testé un produit selon l'invention conformément à l'exemple 1 et le produit selon l'exemple 4.

Le poussiérage et l'abrasion sont également appréciés selon la norme DIN 53 583.

Pertes de poids enregistrées en %

| Exemples<br>Temps | 1 | 4 |
|---|---|---|
| 10 minutes | 1 | 4,5 |
| 1 heure | 1,5 | 7,5 |
| 2 heures | 1,7 | 10,2 |
| 3 heures | 1,8 | 14,5 |

On voit que le produit non conforme à l'invention poussière de manière importante très rapidement et qu'ensuite ce poussiérage continue à cause d'un phénomène intense d'attrition.

### Exemple 5

Selon cet exemple, on fait appel au même mode opératoire qu'à l'exemple 1, mais on met en œuvre un atomiseur à pression liquide tel que décrit précédemment, travaillant sous une pression de liquide de 20 bars.

On a résumé dans le tableau I l'ensemble des résultats de ces cinq exemples afin de comparer les propriétés physicochimiques sur les produits eux-mêmes et les caractéristiques de ces produits dans leur application comme charges renforçantes dans les élastomères.

Dans le tableau VI on a apprécié le comportement des pigments dans le caoutchouc.

On a apprécié les propriétés rhéologiques suivantes : le couple minimal, le couple maximal, le temps optimal, selon les indications de "Continuous Measurement of the cure rate of Rubber" ASTM Special Technical Publication n° 383.

On a aussi mesuré la résistance à la rupture selon la norme NF T 46 002 Eprouvette A1.

On sait aussi qu'une silice doit présenter un bon état de dispersion. Celle-ci a été estimée de façon visuelle en lui conférant un certain nombre de crois X, 0 pour dispersion nulle et 3x pour une bonne dispersion.

On fait des couples de vulcanisat chargé de silice, de quelques microns de côté, puis on colore préférentiellement la silice par le rouge de méthyle afin de visualiser la silice par microscopie optique, la silice présentant au départ le même indice réfraction que l'élastomère.

Le pourcentage de dispersion est le pourcentage de silice dispersés en conglomérats de moins de 8 microns.

On le calcule comme suit:

% dispersion − 100 = SX/L

X = le nombre total de carrés 17 microns dans le réticule de 10 000 carrés,

S = facteur de gonflement de surface dû à l'action de l'agent gonflant, soit s = surface de la coupe après gonflement/surface de la coupe avant gonflement.

L = pourcentage en volume de la silice par rapport au caoutchouc dans son ensemble.

Poids de la silice × volume spécifique de la silice × 100 = poids du mélange × volume spécifique du mélange.

Suivant le même principe, en faisant varier les grossissements du microscope optique, nous pouvons donner le % de silice dispersée en conglomérats de moins de 3 et de moins de 0,7 μ, chaque carré du réticule ayant une dimension linéaire de 6 à 1,4 μ aux différents grossissements. La dispersion est d'autant meilleure que ce pourcentage est plus élevé.

On a utilisé comme vulcanisat de référence, la composition, suivante:

|  | Parties en poids |
|---|---|
| Caoutchouc SBR 1 509 | 95 |
| Zno actif | 3,00 |
| Acide stéarique | 1,00 |
| Polyéthylène glycol M = 4 000 (PEG 4 000) | 2,40 |
| Antioxydant (Diphénylamine octylée PERMANAX OD) | 2,00 |
| N Cyclohexyl 2 benzothiazyl sulfenamide (VULCAFOR CBS) | 1,20 |
| Disulfure de benzothiazyle (VULCAFOR MBTS) | 1,20 |
| Diorthotolyguanidine (VULCAFOR DOTG) | 1,40 |
| Disulfure de Tétraméthylthiurame (VULCAFOR TMTD) | 0,20 |
| Silice | 40,00 |
| Mélange maître } SBR | 4,75 |
| } Soufre | 2,5 |

### Exemples 6 à 10

Ces exemples sont semblables aux exemples 1 à 5, sauf que la mode de préparation initial de la silice est différent.

A une solution de silicate à 145 g/l de $SiO_2$ et 42 g/l de $NaO_2$ on ajoute 30,6 litres d'acide sulfurique à une densité de 1,050 pendant 23 minutes, puis on arrête pendant 10 minutes.

On ajoute alors pendant 47 minutes 62,2 litres d'acide sulfurique jusqu'à obtenir un pH de 4,2 et on laisse stabiliser pendant 10 minutes. La température de réaction est de 70°C.

La reste du mode opératoire est le même que dans les exemples précédents.

L'exemple 6 correspond à l'exemple 1,
L'exemple 7 correspond à l'exemple 2,
L'exemple 8 correspond à l'exemple 3,
L'exemple 9 correspond à l'exemple 4,
L'exemple 10 correspond à l'exemple 5,

Les caractéristiques des produits et leur comportement en caoutchouc sont résumés au tableau II.

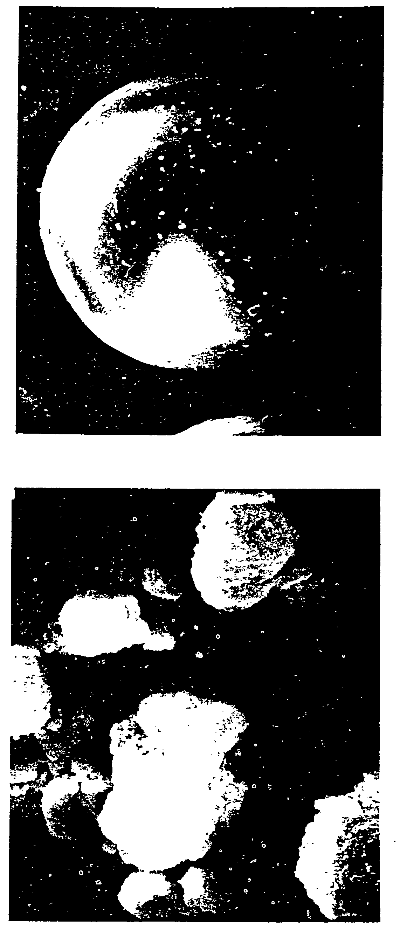

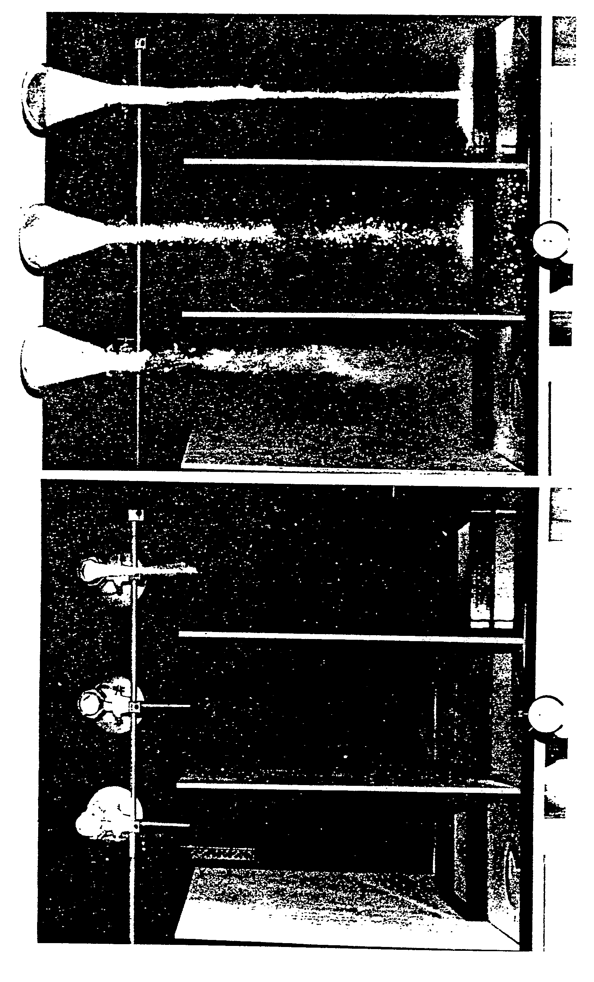

De plus afin d'illustrer le produit selon l'invention on a photographié à la fig. 1 une bille selon l'invention (exemple 5) et à la fig. 2 on a réalisé une photo de la poudre correspondante (exemple 2).

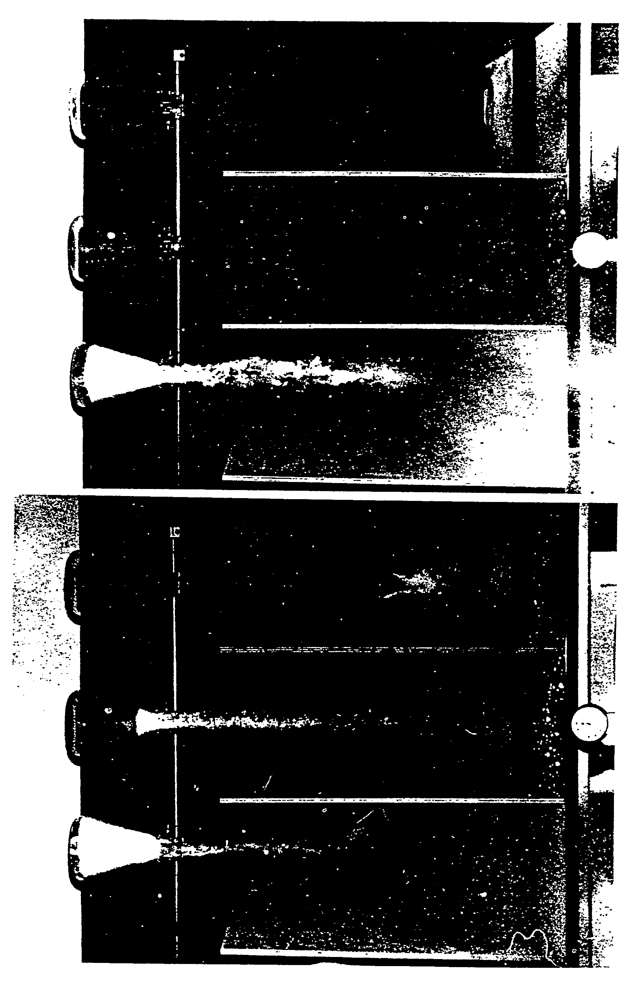

On a aussi élaboré un test visuel de poussiérage. Celui-ci est illustré aux figures 3 à 6.

Selon ce test, on remplit un erlenmeyer de 1 litre du produit à étudier. Le diamètre du col est de 4,4 cm et on bascule l'erlenmeyer et on observe visuellement l'écoulement du produit.

La hauteur de chute est de 63 cm. On a représenté à la fig. 3 l'expérience au moment où le produit commence à s'écouler, puis de 2 en 2 secondes.

On remarque sur la première photo que le produit selon l'invention dès le départ présente un aspect fluide et un meilleur écoulement. On voit ensuite nettement que le produit selon l'invention s'écoule mieux non seulement qu'un produit en poudre, selon l'exemple 2, mais aussi selon un produit granulé, selon l'exemple 4 (au centre sur les photos) alors que le produit selon l'invention (ex. 5) est à droite.

(Voir Tableaux pages suivantes)

Tableau I

| Caractéristiques | Ex. 1 | Ex. 2 | Ex. 3 | Ex. 4 | | Ex. 5 |
|---|---|---|---|---|---|---|
| pH | 6,9 | 6,9 | 6,9 | 6,9 | 6,9 | 6,9 |
| Perte au feu % | 10,6 | 11,5 | 10,9 | 10,9 | 11,3 | 10,6 |
| DRT (Afnor 030 100) | 0,294 | 0,200 | — | 0,29 | 0,30 | 0,294 |
| CTAB | 150 | 151 | 154 | 150 | | 150 |
| BET | 150 | 158 | 170 | 160 | | 150 |
| $V_{600}$ | 0,80 | 0,82 | 0,7 | 0,7 | 0,7 | 0,80 |
| Granulométrie | | | | | | |
| % refus | | | 5 mm | 2 à 5 mm | | |
| 250 µm (sec) | 29 | 0 | — | — | — | 20 |
| 147 µm (sec) | 40 | 6 | — | — | — | 80 |
| 44 µm (humide) | 75 | 60 | — | — | — | 98 |
| Coulabilité | 5 s | 3 mn | — | — | — | 6 s |
| Caoutchouc | | | | | | |
| Cm | 7,0 | 10,0 | 10,0 | 6,0 | 6,0 | 7,5 |
| CM | 95,5 | 104 | 97,5 | 92,0 | 91,5 | 88 |
| Optimal (temps) | 4 mn 45 s | 3 mn 45 s | 4 mn 30 s | 4 mn 00 s | 4 mn 10 s | 3 mn 40 s |
| Résistance rupture kg/cm² | 136 | 145 | 118,0 | 134 | 132 | 143 |
| Dispersion | | | | | | |
|    Visuelle | xxx | xxx | xxx | 0 | 0 | xxx |
|     Optique % à 3 µm | 99 | 98,5 | 85 | 88 | 87 | 99 |
| Poussiérage | | | | | 12 | 13 |
| et abrasion selon DIN 53 | | | | | 3,5 | 0,5 |
| 583 en % en poids | | | | | | |

Tableau II

| Caractéristiques | Ex. 6 | Ex. 7 | Ex. 8 | Ex. 9 | | Ex. 10 |
|---|---|---|---|---|---|---|
| pH | 6,7 | 6,8 | 6,7 | 6,8 | 6,8 | 6,8 |
| Perte au feu | 10,5 | 11,0 | 11,0 | 10,9 | 11,2 | 10,9 |
| DRT | 0,286 | 0,200 | 0,310 | 0,29 | 0,31 | 0,280 |
| CTAB m²/g | 158 | 168 | 184 | 170 | | 171 |
| BET m²/g | 250 | 270 | 246 | 220 | | 271 |
| $V_{600}$ cc/g | 1,05 | 1,1 | 1,0 | 1,0 | 0,95 | 1,0 |
| Granulométrie | | | | | | |
| % refus | | | 5 mm | 2 à 5 mm | | |
| 250 µm (sec) | 6 | 0 | — | — | — | 14 |
| 147 µm (sec) | 46,5 | 8 | — | — | — | 88 |
| 44 µm (humide) | 79 | 40 | — | — | — | 99,5 |
| Coulabilité | 15 s | 2 mn 50 s | | | | 9 s |
| Caoutchouc | | | | | | |
| Cm | 9,5 | 10 | 10 | 8,5 | 7,5 | 7,0 |
| CM | 101 | 98,5 | 102 | 94 | 97 | 100 |
| Optimal (temps) | 5 mn 00 ss | 4 mm 00 s | 5 mm 35 s | 4 mm 15 s | 4 mm 40 s | 5 mm 40 s |
| Résistance rupture kg/cm² | 138 | 127 | 85 | 139 | 134 | 134 |
| Dispersion | | | | | | |
|    Visuelle | xxx | xxx | 0 | xxx | 0 | xxx |
|     Optique % à 3 µm | 98 | 97 | 60 | 75 | 70 | 99 |
| Poussiérage | | | | | 13 | 8,5 |
| et abrasion selon | | | | | 3 | 0,25 |
| DIN 53 583 en % en poids | | | | | | |

Tableau III
Formules

| Formule | SBR 1 | | SBR 2 | | SBR 3 | | SBR 4 | |
|---|---|---|---|---|---|---|---|---|
| SBR 1509 | 90,00 | 90,00 | 95,00 | 95,00 | 95,00 | 95,00 | — | — |
| SBR 1712 | — | — | — | — | — | — | 60,00 | 60,00 |
| SBR 1220 | — | — | — | — | — | — | 40,00 | 40,00 |
| PEG 4000 | 3,00 | 3,00 | 2,40 | 2,40 | 2,40 | 2,40 | 3,00 | 3,00 |
| Acide stéarique | 3,00 | 3,00 | 1,00 | 1,00 | 1,00 | 1,00 | 1,50 | 1,50 |
| Oxyde de zinc | 3,00 | 3,00 | 3,00 | 3,00 | 3,00 | 3,00 | 4,00 | 4,00 |
| Huile de distillation de pétrole | — | — | — | — | — | — | 20,00 | 20,00 |
| Huile de synthèse | — | — | — | — | 15,00 | 15,00 | — | — |
| Antioxygène permanax OD | 2,00 | 2,00 | 2,00 | 2,00 | 2,00 | 2,00 | — | — |
| Antioxygène permanax IPPD | — | — | — | — | — | — | 1,50 | 1,50 |
| Antioxygène permanax 6 PPD | — | — | — | — | — | — | 1,50 | 1,50 |
| Mélange maître A | 7,25 | 7,25 | — | — | — | — | — | — |
| Mélange maître B | 7,25 | 7,25 | 7,25 | 7,25 | 7,25 | 7,25 | — | — |
| Soufre | — | — | — | — | — | — | — | — |
| Vulcafor CBS | — | — | 1,20 | 1,20 | 1,20 | 1,20 | 2,75 | 2,75 |
| Vulcafor MBTS | — | — | 1,20 | 1,20 | 1,20 | 1,20 | — | — |
| Vulcafor DOTG | — | — | 1,40 | 1,40 | 1,40 | 1,40 | — | — |
| Vulcafor TMDT | — | — | 0,20 | 0,20 | 0,20 | 0,20 | — | — |
| Silice selon exemple 5 | 50,00 | — | 40,00 | — | 40,00 | — | 60,00 | — |
| Silice selon exemple 2 | — | — | — | 40,00 | — | 40,00 | — | 60,00 |

Tableau IV

| Formule | Polyisoprène | | E.P.D.M. | | SBR en solution | |
|---|---|---|---|---|---|---|
| Natsyn | 100,00 | 100,00 | — | — | 10,00 | 10,00 |
| Solprène 1206 | — | — | — | — | 85,00 | 85,00 |
| Keltan 6505 | — | — | 100,00 | 100,00 | — | — |
| ZnO (Actif) | 2,50 | 2,50 | 5,00 | 5,00 | 3,00 | 3,00 |
| Acide stéarique | 2,00 | 2,00 | 3,00 | 3,00 | 1,00 | 1,00 |
| Peg 4000 | 1,25 | 1,25 | 2,00 | 2,00 | 2,40 | 2,40 |
| Antioxygène permanax OD | — | — | — | — | 2,00 | 2,00 |
| Huile de synthèse | — | — | 20,00 | 20,00 | — | — |
| Mélange maître B | — | — | — | — | 7,50 | 7,50 |
| Soufre | 2,50 | 2,50 | 3,00 | 3,00 | — | — |
| Vulcafor MBTS | 1,00 | 1,00 | — | — | 1,20 | 1,20 |
| Vulcafor DOTG | 1,00 | 1,00 | — | — | 1,40 | 1,40 |
| Vulcafor CBS | — | — | — | — | 1,20 | 1,20 |
| Vulcafor TMDT | — | — | 1,00 | 1,00 | 0,20 | 0,20 |
| L.D.A. | — | — | 1,00 | 1,00 | — | — |
| M.B.T. | — | — | 1,00 | 1,00 | — | — |
| Silice selon Exemple 5 | 25,00 | — | 40,00 | — | 40,00 | — |
| Silice selon exemple 2 | — | 25,00 | — | 40,00 | — | 40,00 |

Tableau V
Rhéomètre

| Formules | SBR 1 | | SBR 2 | | SBR 3 | | SBR 4 | |
|---|---|---|---|---|---|---|---|---|
| Silices selon Exemple | 5 | 2 | 5 | 2 | 5 | 2 | 5 | 2 |
| Couple mini | 9,0 | 8,0 | 7,5 | 10,0 | 7,0 | 7,0 | 16,0 | 17,0 |
| Couple maxi | 83,0 | 79,0 | 88,0 | 104,0 | 73,5 | 74,0 | 83,0 | 84,0 |
| Temps optimal | 8 mn 30 s | 9 mn 00 s | 3 mn 40 s | 3 mn 45 s | 4 mn 30 s | 4 mn 45 s | 9 mn 00 s | 10 mn 45 s |

| Formules | Polyisoprène | | E.P.D.M. | | SBR en solution | |
|---|---|---|---|---|---|---|
| Silices selon Exemple | 5 | 2 | 5 | 2 | 5 | 2 |
| Couple mini | 10,0 | 10,5 | 10,5 | 12,0 | 11,5 | 12,5 |
| Couple maxi | 68,0 | 64,5 | 88,0 | 88,0 | 103,0 | 104,0 |
| Temps optimal | 5 mn 15 s | 5 mn 00 s | 9 mn 00 s | 9 mn 15 s | 2 mn 45 s | 3 mn 00 s |

Tableau VI

| Formules | SBR 1 | | SBR 2 | | SBR 3 | | SBR 4 | |
|---|---|---|---|---|---|---|---|---|
| Silice selon exemple | 5 | 2 | 5 | 2 | 5 | 2 | 5 | 2 |
| Résistance rupture | 181 | 186 | 139 | 137 | 126 | 121 | 92 | 94 |
| Dureté shore A | 69 | 68 | 65 | 64 | 58 | 56 | 63 | 62 |
| Module 100 % | 16 | 16 | 18 | 16 | 14,0 | 13,0 | 14,0 | 12 |
| Module 300 % | 35 | 33 | 42 | 39 | 32,5 | 30,0 | 35,0 | 33 |
| Allongement % | 620 | 640 | 530 | 540 | 570 | 550 | 520 | 535 |
| Déchirement pantalon | 20,1 | 20,0 | 7,9 | 7,0 | 6,3 | 6,0 | 22,4 | 24,0 |
| Dispersion 8 µm | 99,7 | 99,2 | 99,9 | 99,8 | 99,5 | 99,4 | 99,6 | 99,1 |
| 3 µm | 99,7 | 98,5 | 99,9 | 99,3 | 98,7 | 98,5 | 98,9 | 98,1 |
| 0,7 µm | 99,2 | 98,2 | 99,5 | 99,4 | 97,0 | 97,5 | 97,0 | 96,5 |

TABLEAU VII

| Formules | Polyisoprène | | E.P.D.M. | | SBR en solution | |
|---|---|---|---|---|---|---|
| Silice selon exemple | 5 | 2 | 5 | 2 | 5 | 2 |
| Résistance rupture | 272 | 270 | 89 | 92 | 110 | 114 |
| Dureté shore A | 53 | 52 | 63 | 62 | 68 | 68 |
| Module à 100 % | 13 | 11 | 16 | 16 | 20 | 19 |
| Module à 300 % | 31,2 | 28 | 36 | 35 | 44,5 | 41 |
| Allongement % | 735 | 735 | 475 | 515 | 525 | 540 |
| Déchirement pantalon | 23,5 | 22,0 | 7,2 | 7,9 | 6,1 | 6,0 |
| Dispersion 8 µm | 100,0 | 99,8 | 99,2 | 98,9 | 99,9 | 99,8 |
| 3 µm | 100,0 | 99,7 | 97,0 | 96,6 | 99,7 | 99,4 |
| 0,7 µm | 99,8 | 99,6 | 93,7 | 93,3 | 94,0 | 94,1 |

On a ensuite contrôlé le produit selon l'invention en le testant dans diverses formules SBR, Polyisoprene, E.P.D.M. ou SBR en solution (voir tableaux III et IV).

Dans ces tableaux, les différents produits répondent aux formules chimiques et/ou normes suivantes:

SBR 1 509: Butadiène Styrène Rubber — voir p. 25 The Synthetic Rubber Manual 76° edition.

SBR 1 712: Butadiène Styrène Rubber — voir p. 28 The Synthetic Rubber Manual 76° edition.

SBR 1 220: Butadiène Rubber — voir p. 32 The Synthetic Rubber Manual 76° edition.

PEG 4 000: Polyethylène glycol avec masse moléculaire env. 4 000.

Huile de distillation de pétrole

Huile de synthèse

Antioxygène PERMANAX OD — Diphénylamine octylée

Antioxygène PERMANAX IPPD — N isopropyl N' phényl paraphénylènediamine

VULCAFOR CBS — N cyclohexyl 2 benzothiazyl sulfenamide

VULCAFOR DOTG — Diorthotolylguanidine

VULCAFOR TMTD — Disulfure de Tétraméthylthiurame

VULCAFORE MBTS — Disulfure de benzothiazyle NATSYN — Polyisoprène de GOODYEAR
SOLPRENE 1206 — SBR en solution (PHILLIPS)
KELTAN 6505 — ETHYLENE Propylène Diène Monomère de D.S.M.
MBT — 2 Mercaptobenzothiazole
L.D.A. — Accélérateur N Diéthyl dithiocarbamate de Zinc de BAYER
Mélange maître A (accélérateurs)

SBR    5
MBTS   0,75
DOTG   1,5
       ————
       7,25

Mélange maître B (soufre)
SBR      4,75
SOUFRE   2,5
         ————
         7,25

Le comportement en caoutchouc est résumé dans les tableaux V à VIII.

## Revendications

1. Pigment à base de silice précipitée, caractérisé par le fait qu'il se présente sous forme de bille sensiblement sphérique pleine et homogène, constitué par une silice qui présente une densité à l'état tassé supérieure à 0,200, de préférence comprise entre 0,28 et 0,32, une surface BET comprise entre 100 et 350 m²/g, une surface CTAB comprise entre 100 et 350 m²/g et une taille moyenne de particules supérieure à 150 µm, de préférence comprise entre 200 et 300 µm et un volume spécifique compris entre 0,7 et 1,1.

2. Procédé d'obtention d'un pigment selon la revendication 1, caractérisé par le fait que l'on sèche avec un atomiseur à buses ou à deux fluides une suspension de silice obtenue par précipitation, présentant on pH supérieur à 4 et un taux de matière sèche supérieur à 18% en poids, de préférence compris entre 20 et 25%.

3. Procédé selon la revendication 2, caractérisé par le fait que le pH de la suspension est celui de fin de précipitation de la silice et est sensiblement compris entre 4,5 et 6.

4. Procédé selon l'une des revendications 2 et 3, caractérisé par le fait que la suspension à atomiser présente une viscosité comprise entre 10 et 100 N s/m², à un gradient de vitesse de 10³ seconde⁻¹.

5. Procédé selon l'une des revendications 2 à 4, caractérisé par le fait que la bouillie de précipitation est enrichie en matière sèche par passage dans un filtre presse horizontal puis est délitée au moyen d'un dispositif à vis extrudeuse puis à broyeur colloïdal.

6. Procédé selon l'une des revendications 2 à 4, caractérisé par le fait que la gâteau de filtration est enrichie en matière sèche par apport de silice pulvérulente.

7. Application comme charge renforçante pour élastomère d'un pigment sous forme de bille sensiblement sphérique plein et homogène, constitué d'une silice précipitée qui présente une densité à l'état tassé supérieure à 0,200, de préférence comprise entre 0,28 et 0,32, une surface BET comprise entre 100 et 350 m²/g, une surface CTAB comprise entre 100 et 350 m²/g et une taille moyenne de particules supérieure à 150 µm, de préférence comprise entre 200 et 300 µm et un volume spécifique compris entre 0,7 et 1,1.

## Patentansprüche

1. Pigment auf der Basis von gefällter Kieselsäure, dadurch gekennzeichnet, daß es im wesentlichen aus kugeligen, massiven und homogenen Teilchen besteht und aus einer Kieselsäure mit einem Stampfgewicht über 0,200, vorzugsweise zwischen 0,28 und 0,32, einer BET-Oberfläche zwischen 100 und 350 m²/g, einer CTAB-Oberfläche zwischen 100 und 350 m²/g und einer mittleren Teilchengröße über 150 µm, vorzugsweise zwischen 200 und 300 µm, und einem spezifischen Volumen zwischen 0,7 bis 1,1 besteht.

2. Verfahren zur Herstellung eines Kieselsäure-pigments nach Anspruch 1, dadurch gekennzeichnet, daß man eine durch Fällung erhaltene Kieselsäuresuspension mit einem pH-Wert von mindestens 4 und einem Feststoffgehalt über 18 Gew.-%, vorzugsweise von 20 bis 25 Gew.-%, mit Hilfe eines Düsenzerstäubers oder eines Zerstäubers für 2 Flüsigkeiten trocknet.

3. Verfahren nach Anspruch 2, dadurch gekennzeichnet, daß der pH-Wert der Suspension der pH-Wert am Ende der Ausfällung der Kieselsäure ist und im wesentlichen 4,5 bis 6 beträgt.

4. Verfahren nach einem der Ansprüche 2 oder 3, dadurch gekennzeichnet, daß die Suspension, die sprühgetrocknet werden soll, eine Viskosität von 10 bis 100 Ns/m² bei einem Geschwindigkeits-Gradienten von 10³S⁻¹ aufweist.

5. Verfahren nach einem der Ansprüche 2 bis 4, dadurch gekennzeichnet, daß die Fällungsaufschlämmung durch Behandlung in einer horizontalen Filterpresse mit Feststoff angereichert und dann mit Hilfe einer Vorrichtung mit einer Extrudierschnecke und dann mit einer Kolloidmühle zerteilt wird.

6. Verfahren nach einem der Ansprüche 2 bis 4, dadurch gekennzeichnet, daß der Filterkuchen durch Zugabe von Kieselsäurepulver mit Feststoff augereichert wird.

7. Verwendung eines Pigments aus im wesentlichen kugeligen, massiven und homogenen Teilchen, hergestellt aus einer Kieselsäure mit einem Stampfgewicht über 0,200, vorzugsweise zwischen 0,28 und 0,32, einer BET-Oberfläche zwischen 100 und 350 m²/g, einer CTAB-Oberfläche zwischen 100 und 350 m²/g und einer mittleren Teilchengröße über 150 µm, vorzugsweise zwischen 200 und 300 µm, und einem spezifischen Volumen zwischen 0,7 bis 1,1 als Verstärkerfüllstoff für Elastomere.

**Claims**

1. A silica-base pigment characterised in that it is in the form of a substantially spherical, solid homogenous ball and composed of a silica that has a specific gravity in the compacted state of higher than 0.200 and preferably from 0.28 to 0.32, a BET surface area of from 100 to 350 m²/g, a CTAB surface area of from 100 to 350 m²/g and a mean particle size of more than 150 µm and preferably from 200 to 300 µm, and a specific volume of from 0.7 to 1.1.

2. A method of producing a silica according to Claim 1 characterised in that a suspension of silica produced by precipitation, with a pH-value of higher than 4 and a dry material content of more than 18% by weight and preferably from 20 to 25% by weight, is spray dried using nozzles or two fluids.

3. A method according to Claim 2 characterised in that the pH-value of the suspension is that at the end of precipitation of the silica and is substantially from 4.5 to 6.

4. A method according to Claim 2 or 3 characterised in that the suspension to be sprayed has a viscosity of from 10 to 100 N s/m² at a speed gradient of $10^3$ second$^{-1}$.

5. A method according to one of Claims 2 to 4 characterised in that the precipitation slurry is enriched with dry material by passing it into a horizontal filter press and is then split by means of an arrangement having an extruder screw and then a colloidal crusher.

6. A method according to one of Claims 2 to 4 characterised in that the filter cake is enriched with dry material by adding silica in powder form.

7. The use, as a reinforcing filler for elastomers, of a pigment in the form of a substantially spherical, solid homogenous ball and composed of a precipitated silica that has a specific gravity in the compacted state of higher than 0.200 and preferably from 0.28 to 0.32, a BET surface area of from 100 to 350 m²/g, a CTAB surface area of from 100 to 350 m²/g and a mean particle size of more than 150 µm and preferably of from 200 to 300 µm, and a specific volume of from 0.7 to 1.1.